# EUROPEAN PATENT APPLICATION

(11) **EP 3 919 270 A1**
(43) Date of publication of application: **08.12.2021**
(21) Application number: 19912591.5
(22) Date of filing: 30.08.2019
(51) Int. Cl.: B32B 9/00, B01J 35/02, G02B 1/115, G02B 1/18, G02B 7/02, G03B 15/00

(54) **HYDROPHILIC MEMBER, LENS IN WHICH SAME IS USED, ON-BOARD CAMERA, RESIN FILM, AND WINDOW**

(30) Priority: 28.01.2019 JP 2019011846
(71) Applicant: Hitachi, Ltd., Tokyo 100-8280 (JP)
(72) Inventor: SASAKI Hiroshi, Tokyo 100-8280 (JP); MORI Shunsuke, Tokyo 100-8280 (JP)
(74) Representative: MERH-IP Matias Erny Reichl Hoffmann Patentanwälte PartG mbB
(86) International application number: PCT/JP2019/034150
(87) International publication number: WO 2020/158030

(57) **Abstract**

A hydrophilic member including a base material, an underlayer, and an outermost surface layer, wherein the underlayer is disposed between the base material and the outermost surface layer, the outermost surface layer contains silicon dioxide particles, titanium dioxide particles, and a silicon dioxide binder, and the underlayer contains silicon dioxide. With this structure, it is possible to provide a member that has high hydrophilicity, antifouling properties, transparency, and abrasion resistance, and includes a base material that is hardly decomposed by generated radicals even if it is made of a resin.

## Description

### Technical Field

The present invention relates to a hydrophilic member, and a lens, an in-vehicle camera, a resin film, and a window including the hydrophilic member.

### Background Art

In windowpanes of buildings, automobiles, and the like that are exposed to outdoor wind and rain, visibility is hampered due to water droplets. One solution to this problem is a means of hydrophilizing a surface of the windowpane. With this means, it is possible to form a film of the attached water to prevent the adhesion of water droplets and ensure the visibility through the windowpane.

Unfortunately, organic grime derived from automobile exhaust gas, factory smoke, and the like is likely to adhere to hydrophilic surfaces. Adhesion of organic matters lowers the hydrophilicity. When this happens, water adheres to the surfaces in the form of droplets, and the visibility is significantly reduced. Similarly to the windowpanes, lenses mounted on the outer surface of cameras used in rear view monitors of automobiles, trucks, and the like, though having hydrophilicity at the beginning, come to have lower hydrophilicity when grime of organic matters contained in exhaust gas or the like adheres to the lenses. Therefore, rainwater adheres to the lens as water droplets, and the camera is deteriorated in visibility.

PTL 1 discloses an in-vehicle camera including, on a surface of a lens, a hydrophilic film on which a water film is easily formed even with a small amount of small water droplets adhered to the hydrophilic film. The hydrophilic film provided on the surface of the lens contains silicon dioxide particles having an average particle diameter in a predetermined range, and a binder containing silicon dioxide as a main component, and of the silicon dioxide particles dispersed in the hydrophilic film, the silicon dioxide particles at a side of the surface of the lens have a larger average particle diameter.

PTL 2 discloses, from the viewpoint of reducing the generation of colored interference colors and colored double images, an antifogging element and the like. The antifogging element includes a transparent glass substrate, and over the transparent glass substrate, a barrier layer containing at least one of Al₂O₃, SiO₂, and MgF₂, an amorphous type titanium dioxide layer formed on the barrier layer, an anatase type titanium dioxide layer formed on the amorphous type titanium dioxide layer, and a hydrophilic layer of porous structure of SiO₂ formed on the anatase type titanium dioxide layer, and each of the layers has a predetermined film thickness.

PTL 3 discloses a photocatalyst-coated body including an organic base material as a base material, and a photocatalyst layer provided on the organic base material, wherein the photocatalyst layer contains titanium oxide particles as photocatalyst particles and silica particles as inorganic oxide particles, the photocatalyst layer has a gap between particles in the layer, and the photocatalyst-coated body includes an intermediate layer containing a silicone-modified resin and the like between the base material and the photocatalyst layer.

PTL 4 discloses, as a photocatalyst layer-forming composition that exhibits photocatalytic activity such as decomposition and removal of harmful substances, deodorization, and antifouling in both rain and fine weather, and has excellent transparency, a composition containing predetermined titanium dioxide as photocatalyst particles and a silica compound, and having predetermined characteristics. PTL 4 discloses the formation of a transparent base material with a photocatalyst layer, which includes a base material, a photocatalyst layer, and a base material protective layer that protects the base material from the photocatalytic action of the photocatalyst layer and is interposed between the base material and the photocatalyst layer, and a silica sol consisting of hydrolyzed alkoxysilane as an example of a silica compound.

### Citation List

### Patent Literature

PTL 1: JP 2015-49281 A
PTL 2: JP 2005-330148 A
PTL 3: JP 2010-99647 A
PTL 4: JP 2005-131552 A

### Summary of Invention

### Technical Problem

Since PTL 1 does not disclose countermeasures for adhesion of organic matters, it is considered that there is room for improvement in ensuring hydrophilicity for a long period of time.

PTL 2 to 4 disclose members including a film having hydrophilicity and antifouling properties and formed using titanium oxide as a photocatalyst, but do not disclose the hardness of the film in detail.

An object of the present invention is to provide a member that has high hydrophilicity, antifouling properties, transparency, and abrasion resistance, and includes a base material that is hardly decomposed by generated radicals even if it is made of a resin.

### Solution to Problem

The hydrophilic member of the present invention includes a base material, an underlayer, and an outermost surface layer, the underlayer is disposed between the base material and the outermost surface layer, the outermost surface layer contains silicon dioxide particles, titanium dioxide particles, and a silicon dioxide binder, and the underlayer contains silicon dioxide.

### Advantageous Effects of Invention

According to the present invention, it is possible to provide a member that has high hydrophilicity, antifouling properties, transparency, and abrasion resistance, and includes a base material that is hardly decomposed by generated radicals even if it is made of a resin.

### Brief Description of Drawings

[FIG. 1] FIG. 1 is a schematic cross-sectional view showing a hydrophilic member of the present invention.
[FIG. 2] FIG. 2 is a schematic cross-sectional view showing another example of the hydrophilic member of the present invention, the hydrophilic member having a structure in which a resin film is attached to a glass plate.
[FIG. 3] FIG. 3 is a perspective view showing another example of the hydrophilic member of the present invention, the hydrophilic member including an antireflection film provided on a surface of a base material.
[FIG. 4] FIG. 4 is a schematic cross-sectional view showing an in-vehicle camera of the present invention.

### Description of Embodiments

The present invention relates to a hydrophilic member including a base material, and a film having hydrophilicity and antifouling properties and provided over a surface of the base material, specifically, a hydrophilic member including a glass plate, a resin plate, a resin film or the like as the base material. In other words, the base material may be a hard plate-like member that is difficult to bend, or may be a film-like member having bendability. The hydrophilic member is used in lenses, windows, and the like. The hydrophilic member is also used in lenses, and cameras, sensors, and the like that are equipped in a vehicle having a window and the like.

As a result of diligent studies, the present inventors found that a member including, at an outermost surface relative to a base material, a layer containing silicon dioxide particles, titanium dioxide particles, and silicon dioxide that fixes the silicon dioxide particles and the titanium dioxide particles, and further including a silicon dioxide layer between the outermost surface layer and the base material has hydrophilicity and photocatalytic properties at a surface thereof. The present inventors also found that the base material is not decomposed by the photocatalytic action even if it is made of an organic matter.

A specific solution of the present invention is as follows.

The hydrophilic member of the present invention includes a base material, an underlayer, and an outermost surface layer. The underlayer is disposed between the base material and the outermost surface layer. The outermost surface layer contains silicon dioxide particles, titanium dioxide particles, and a silicon dioxide binder. The underlayer contains silicon dioxide.

It is desirable that the silicon dioxide particles in the outermost surface layer have an average particle diameter of 10 to 50 nm.

It is desirable that the titanium dioxide particles in the outermost surface layer have an average particle diameter of 7 to 35 nm.

It is desirable that silicon dioxide and titanium dioxide in the outermost surface layer have a mass ratio of 4 : 6 to 7 : 3.

It is desirable that the outermost surface layer have a thickness of 40 to 220 nm.

It is desirable that the outermost surface layer have an arithmetic mean roughness of 1 to 4 nm.

It is desirable that the underlayer have a thickness of 15 to 90 nm.

The base material may contain glass or a resin.

The base material may contain silicon dioxide glass, lanthanum-boron glass, or tantalum glass.

The base material may contain a polycarbonate resin or an acrylic resin.

The lens of the present invention may be the above-mentioned hydrophilic member itself. Alternatively, the lens of the present invention may include the hydrophilic member.

The lens may include an antireflection film disposed between the underlayer and the base material.

It is desirable that the antireflection film include an aluminum oxide layer and a zirconium dioxide layer provided in this order on a surface of the base material.

The camera of the present invention may be provided at an outer periphery of a vehicle, and includes the above-mentioned lens. That is, the camera of the present invention is an in-vehicle camera.

It is desirable that the resin film of the present invention be substantially transparent and transmit light in a visible region. The resin film may be the above-mentioned hydrophilic member itself. Alternatively, the resin film may include the hydrophilic member.

In the resin film, the underlayer and the outermost surface layer may be provided over one surface of the base material, and an adhesive layer may be provided over another surface of the base material.

It is desirable that the window of the present invention be a window through which an outside of a building or a vehicle is viewable from an inside of the building or the vehicle. The window may be the above-mentioned hydrophilic member itself. Alternatively, the window may include the hydrophilic member.

In the window, the underlayer and the outermost surface layer may be provided over a surface of the base material, the surface being positioned at a side of the inside or the outside.

The window may have a structure in which a resin film is attached to the base material.

It is desirable that the underlayer and the outermost surface layer be provided on a surface of a resin that constitutes the resin film.

Hereinafter, embodiments of the present invention will be described.

### 1. Film structure

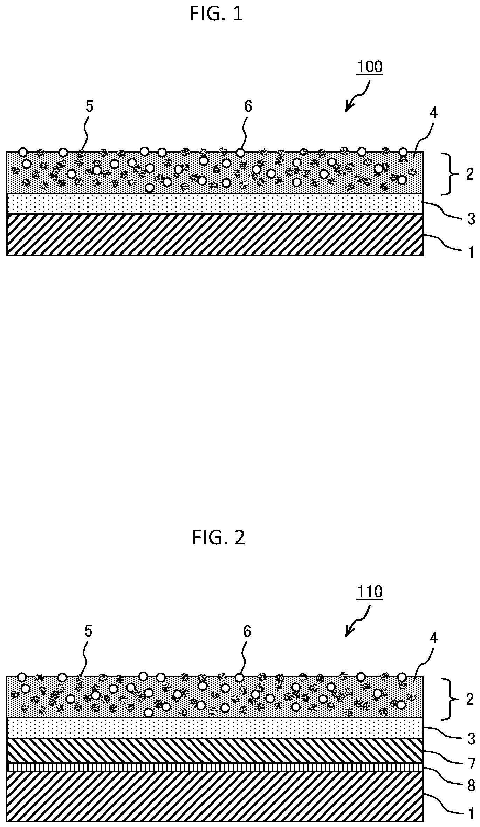

FIG. 1 schematically shows a cross section of the hydrophilic member of the present invention.

In the drawing, a hydrophilic member 100 includes a film having a two-layer structure on a surface of a base material 1. The film includes a photocatalyst layer 2 (upper layer film) that constitutes the outermost surface and an underlayer 3 (lower layer film) provided between the base material 1 and the photocatalyst layer 2. The photocatalyst layer 2 has a structure in which silicon dioxide particles 5 and titanium dioxide particles 6 are dispersed in a binder 4 containing silicon dioxide as a substantial basic component. The underlayer 3 is a thin film of silicon dioxide as described later, and may be formed by the application of the binder 4. The upper layer film is also referred to as an "outermost surface layer".

### (1) Underlayer 3 (lower layer film)

### a) Film structure

The film is a thin film of silicon dioxide. The film can be formed by a vacuum process such as sputtering or vapor deposition. However, in order to improve the adhesion between the coating film at a surface side and the base material, a silicon dioxide film formed by coating and thermal curing is preferable. This is because the film formed in this manner has a large number of angstrom-order gaps in the surface, and the binder in the coating film forming the outermost surface infiltrates into the gaps and is cured, so that a strong anchor effect is expected.

The thickness of the film is required to be at least 15 nm so that the anchor effect may be exerted. Further, since the film includes a large number of fine gaps therein, if the film is too thick, the film may have lower physical strength for withstanding impacts such as abrasion. To avoid such a case, it is desirable to limit the film thickness to 90 nm at the maximum.

Further, in the case where the base material is a resin film that is easily deformable, the lower layer film may be cracked when the base material is rolled into a roll having an inner diameter of about 10 cm for storage. In order to reduce the crack, it is desired to make the lower layer film as thin as possible. Specifically, setting the thickness of the lower layer film to 50 nm or less results in that the lower layer film is hardly cracked even when the base material is rolled. Therefore, when the base material is a resin film, the thickness of the lower layer film is preferably 15 to 50 nm.

### b) Film forming method

When the film is formed by coating and thermal curing, it is preferable to employ a method of applying a silica sol, which is obtained by dissolving and suspending a polymer of alkoxysilane as a kind of hydrolyzable organosilicon compound in a solvent, and thermally curing the silica sol. The solvent used in the silica sol is water or an alcohol such as ethanol, 1-propanol, 2-propanol, or 1-butanol. Of these, an alcohol that has a low surface tension and is not easily repelled by a resin base material or the like is preferable. The thermal curing is performed at a temperature tolerated by the base material.

### (2) Photocatalyst layer 2 (upper layer film)

### a) Film structure

As described above, the film has a structure in which the silicon dioxide particles 5 and the titanium dioxide particles 6 are dispersed in the binder 4 containing silicon dioxide as a substantial basic component (FIG. 1). The details of each composition are as follows.

### i) Binder material

The binder is preferably the silica sol used in the formation of the above-mentioned lower layer film.

### ii) Silicon dioxide particles

It is assumed that the hydrophilic member of the present invention will be mainly applied to a case where the member is used in a lens, a window, or the like, that is, a case where the member is used as a member that is required to transmit at least visible light to some extent. The hydrophilic member may be a member that transmits light other than visible light. For example, the hydrophilic member may be a member that transmits infrared rays, ultraviolet rays, and the like. Of course, the hydrophilic member is also applicable to a case where the member is used as a member for which light transmission is not emphasized.

In the studies made by the present inventors, considering practicality, it is desirable that the hydrophilic member transmit 85% or more of light in a visible region, that is, a region of 400 to 700 nm. If the silicon dioxide particles in the film have a large size, the visible light is scattered by the silicon dioxide particles, and the substantial transmittance is lowered. In particular, if the silicon dioxide particles have an average particle diameter of 100 nm or more, the film becomes cloudy. Therefore, the average particle diameter of the silicon dioxide particles is required to be 50 nm or less. Alternatively, if the average particle diameter is too small, the silicon dioxide particles are likely to be scattered when being handled in weighing or the like during film formation described later. Therefore, it is desirable that the average particle diameter be 10 nm or more.

From the above, the average particle diameter of the silicon dioxide particles is preferably 10 to 50 nm.

### iii) Titanium dioxide particles

Similarly to the case of silicon dioxide particles, if the titanium dioxide particles have too large a size, scattering of the visible light may lower the transmittance. In addition, titanium dioxide has a high reflectance because it has a refractive index of about 2.6. Therefore, titanium dioxide has a higher refractive index than that of silicon dioxide, that is, about 1.5, and even if titanium dioxide has a small diameter, it has an effect greater than that of silicon dioxide. Therefore, the average particle diameter of the titanium dioxide particles is required to be 35 nm or less.

In addition, titanium dioxide has a higher specific gravity (a specific gravity of about 3.9) than that of silicon dioxide. Therefore, the lower limit of the particle size of titanium dioxide particles is smaller than that of silicon dioxide particles, and titanium dioxide particles having a particle size as small as 7 nm can be handled similarly to silicon dioxide particles having an average particle diameter of 10 nm (and having a specific gravity of about 2.2).

From the above, the average particle diameter of the titanium dioxide particles is preferably 7 to 35 nm.

### iv) Film thickness, surface roughness, percentage of each composition, and the like

The thickness of the film slightly varies depending on the size of silicon dioxide and titanium dioxide used, but is preferably about 40 to 220 nm. When the film has a thickness almost equal to the particle size to about 1.2 times the particle size, the film is almost a single particle film. In this case, the surface roughness (herein, expressed by the arithmetic mean roughness (Ra)) is a value almost equal to the radius of the particles in the film.

Assuming that the lower limit of the average particle diameter of silicon dioxide is 10 nm, the Ra is 5 nm. When the Ra is 5 nm or a value larger than 5 nm, sharp objects are likely to be caught by the unevenness on the film surface, which causes a problem that the film is easily peeled off. When the film has a large thickness of about 4 times the particle size, the film is flat and the Ra is smaller. When the Ra is 4 nm or less, sharp objects are less likely to be caught by the film, and abrasion resistance is improved. Therefore, it is desirable that the lower limit of the film thickness be 40 nm, which is about 4 times the lower limit of the size of the silicon dioxide particles used.

Meanwhile, titanium dioxide has a refractive index of about 2.5, which is higher than the refractive indices of general-purpose transparent base materials such as silicon dioxide (having a refractive index of about 1.5) and an acrylic resin (having a refractive index of about 1.49). Therefore, if the film is too thick, the film has a high reflectance in the visible region, which causes a problem of lower transmittance. In order to ensure the visibility for camera lenses and vehicles, it is considered necessary to have a transmittance of at least 85% in the visible region of 400 to 700 nm. When titanium dioxide particles, silicon dioxide particles, and the like are added to the film, the transmittance in the short wavelength region, specifically in the vicinity of 400 nm, tends to lower due to Rayleigh scattering even though the region is within the visible region. Therefore, it is required to achieve a transmittance of 85% or more at 400 nm.

As a result of studies to achieve the above-mentioned transmittance, it was found that the film thickness is required to be 220 nm or less. Further, a film having a thickness of this level is considerably flat. Since the film contains silicon dioxide particles and titanium dioxide particles, the Ra depends on the content rate of the two types of particles, but in order to maintain the content rate of titanium dioxide required to exert the antifouling function derived from the photocatalytic action, the Ra should be about 1 nm at the film thickness of 220 nm.

From the above, the thickness of the film is preferably 40 to 220 nm. In addition, the arithmetic surface roughness Ra of the film is preferably 1 to 4 nm.

Further, in the case where the base material is a resin film that is easily deformable, the upper layer film may be cracked when the base material is rolled into a roll having an inner diameter of about 10 cm for storage. In order to reduce the crack, it is desired to make the upper layer film as thin as possible. Specifically, setting the thickness of the upper layer film to 80 nm or less results in that the upper layer film is hardly cracked even when the base material is rolled. Therefore, when the base material is a resin film, the thickness of the upper layer film is preferably 40 to 80 nm. It is speculated that the reason why the upper layer film can be made thicker than the lower layer film is that the upper layer film is improved in flexibility due to the particles of titanium dioxide and silicon dioxide contained therein.

The ratio of percentage of silicon dioxide to titanium dioxide in the film is determined in consideration of the photocatalytic action, hydrophilicity, physical strength of the film, and the like. The higher the percentage of titanium dioxide is, the more pronounced the photocatalytic action exhibited is. Conversely, the higher the percentage of the silicon dioxide particles is, the more hydrophilic the film is. In addition, increasing the percentage of the silicon dioxide binder increases the physical strength of the film.

When coating and thermal curing is employed as a film forming method described later, titanium dioxide having a higher specific gravity than that of silicon dioxide is localized to the lower layer film side rather than to the side of the film surface. Then, oxygen radicals or OH radicals for decomposing organic matters on the surface are less likely to reach the surface. In particular, the thicker the film is, the greater the effect is. Therefore, the percentage of titanium dioxide should be increased.

As a result of studies made by the present inventors, it was found that when the film thickness is 220 nm, which is the upper limit mentioned above, the percentage of titanium dioxide for exerting the photocatalytic action is required to be 30% or more based on the mass of the film. Meanwhile, when the film thickness was 40 nm, which is the lower limit, the photocatalytic effect was observed even when the percentage of titanium dioxide was less than 30% based on the mass of the film. Therefore, in consideration of the film thickness, it can be said that the lower limit of the percentage of the titanium dioxide particles added is 30%.

In order to investigate the upper limit of the percentage of titanium dioxide, the percentage of titanium dioxide added was increased in films having each of the thicknesses. As a result, a pencil hardness of 3H or more was obtained when the percentage of titanium dioxide was 70% based on the mass of the film. The pencil hardness, however, was significantly reduced when the percentage of titanium dioxide was increased from 70%. A film having a percentage of titanium dioxide particles of 73% based on the mass of the film had a pencil hardness of H or less even when the percentage of silicon dioxide particles was reduced to almost 0. Further, a film having a percentage of titanium dioxide particles of 77% based on the mass of the film had a pencil hardness reduced to B. A composition that provides a pencil hardness of H or less is thought to have a practical problem because an acrylic resin, which has the highest hardness among transparent general-purpose resin base materials, has a pencil hardness of 2H.

Therefore, it is judged that the upper limit of the percentage of the titanium dioxide particles added is preferably 70%.

From the above, the percentage of the titanium dioxide particles in the film is preferably 30 to 70% by mass. The rest are the silicon dioxide binder and the silicon dioxide particles.

As described above, the silicon dioxide particles are added to the film to improve the hydrophilicity of the film. Addition of these particles increases the percentage of fine gaps inside the film, so that water easily infiltrates into the film due to the capillary phenomenon, and the film surface has improved hydrophilicity. Increasing the percentage of the silicon dioxide particles, however, reduces the percentage of the silicon dioxide binder, so that the film may have lower physical strength such as abrasion resistance.

As a result of studies made by the present inventors, it was found that the percentage of the silicon dioxide binder is required to be at least 20% based on the mass of the film in order to achieve a pencil hardness of 3H. It was also found that the percentage of the silicon dioxide particles is required to be 10% or more based on the mass of the film in order to obtain hydrophilicity represented by a contact angle with water of 10° or less.

Therefore, the percentage of the silicon dioxide particles in the film is preferably 10% by mass or more.

### b) Film forming method

The film is formed by applying, to the base material, a coating material obtained by mixing the above-mentioned titanium dioxide particles, silicon dioxide particles, and silica sol with a solvent, and thermally curing the coating material.

The solvent is not particularly limited as long as it dissolves the silica sol. However, when a coating material containing a solvent having a high surface tension is applied to a base material such as a resin film, the coating material may be repelled after the application, and a uniform film may not be formed. Therefore, a solvent having a high surface tension, such as water or ethylene glycol is not preferable. Further, when the base material is made of a polycarbonate resin, an acrylic resin or the like, a ketone solvent or an ester solvent is not preferable because the base material may be dissolved in the solvent. Therefore, alcohols such as ethanol, 1-propanol, 2-propanol, and 1-butanol, which have a lower surface tension than those of water and ethylene glycol and do not dissolve a polycarbonate resin, an acrylic resin, and the like are preferable.

The solid content concentration in the coating material depends on the coating method. The coating method may be a normal coating method such as spin coating, dip coating, flow coating, bar coating, and roll coating.

As described above, in the coating material, the silicon dioxide particles and the titanium dioxide particles are dispersed, and the silica sol is present in a dissolved state. Silicon dioxide has a specific gravity of about 2.2, which is larger than those of alcoholic solvents having a specific gravity of about 0.8. Nevertheless, the silicon dioxide particles are easily dispersible in the coating material by a normal stirring operation using an overhead stirrer or a stirring bar, since the particles have a particle size of 50 nm at the maximum and have a large surface area.

Meanwhile, the titanium dioxide particles have a high specific gravity of about 3.9, and are therefore dispersible in the coating material by stirring with a device such as a planetary ball mill or a homogenizer.

Further, a dispersant used is required to be a material that is almost volatilized during film formation. This is because the photocatalytic action of titanium dioxide may decompose the dispersant remaining in the film. Therefore, examples of organic dispersants include ethylene glycol monoalkyl ethers and diethylene glycol monoalkyl ethers that are volatilized due to thermal curing during film formation.

After the coating material is applied to the base material by any of the above-mentioned coating methods, the coating material is thermally cured to form a film. A higher thermal curing temperature has an advantage that the thermal curing progresses faster and a film having higher hardness is formed. However, when the base material is made of a resin such as a polycarbonate resin or an acrylic resin, too high a heating temperature may deform the base material. Therefore, it is desirable to set the heating temperature to the maximum temperature that the base material can withstand.

### 2. Base material

The base material of the present invention is a glass plate, a resin plate, a lens, or the like that provides high visibility. Since the above-mentioned two-layer film formed on the surface of the base material transmits about 85% or more of light in a visible region, it is possible to ensure the visibility of the base material.

When the base material is a glass plate for building windows or a glass plate for vehicle windows, the hydrophilic member has a structure in which the above-mentioned two-layer film is formed on the glass plate containing silicon dioxide, and sodium, potassium, or the like added to silicon dioxide.

When the base material is a resin plate or a resin film, if the lower layer film is too thin, oxygen radicals, OH radicals, or the like generated from the film at the surface may decompose the surface of the resin plate or the resin film. Therefore, it is desirable that the film have a thickness of about 40 to 90 nm. With the thick film, oxygen radicals, OH radicals, or the like are prevented from reaching the surface of the resin plate or the resin film.

Further, in the case of a resin film, if an attempt is made to apply a coating liquid without any pretreatment, the coating liquid may be repelled and a uniform film may not be formed. In such a case, the surface to be coated with the coating liquid may be irradiated with oxygen plasma or placed in an ozone atmosphere in advance, so that the surface may have improved wettability and will not repel the coating liquid.

FIG. 2 schematically shows a cross section of the hydrophilic member according to another example of the present invention, the hydrophilic member having a structure in which a resin film is attached to a glass plate.

A hydrophilic member 110 shown in the drawing includes a base material 1 made of a glass plate, and a resin film 7, which has a two-layer structure film and an adhesive layer 8, attached to a surface of the base material 1. The film has a two-layer structure similar to that shown in FIG. 1. That is, the film includes a photocatalyst layer 2 that constitutes the outermost surface, and an underlayer 3 provided between the resin film 7 and the photocatalyst layer 2.

The resin film itself provided with the photocatalyst layer 2 and the underlayer 3 is also an example of the hydrophilic member of the present invention containing a resin as a base material. It is desirable that the resin film have bendability.

Further, as shown in FIG. 2, providing the adhesive layer 8 on a back surface of the resin film 7 provides a glass plate included in the hydrophilic member of the present invention simply by attaching the resin film 7 to the glass plate without undergoing the steps of application to the glass plate and thermal curing.

In the case of a glass plate or a lens, an antireflection film may be provided on a surface of the base material.

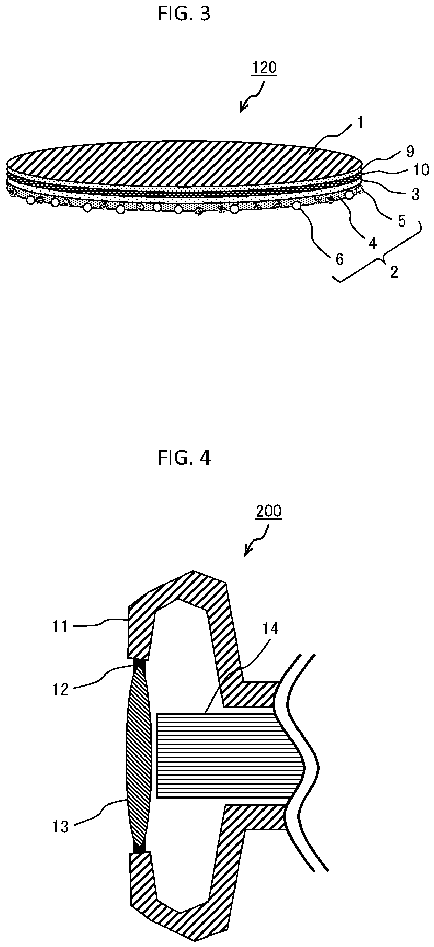

FIG. 3 is a perspective view showing another example of the hydrophilic member of the present invention, the hydrophilic member including an antireflection film provided on a surface of a base material.

In a hydrophilic member 120 shown in the drawing, as an example, an aluminum oxide layer 9 and a zirconium dioxide layer 10 that constitute an antireflection film are provided on a lower surface of a base material 1.

In the drawing, the hydrophilic member has a structure in which an underlayer 3 is provided on a surface of the zirconium dioxide layer 10, and a photocatalyst layer 2 containing a binder 4, silicon dioxide particles 5, and titanium dioxide particles 6 is provided on a surface of the underlayer 3. That is, the hydrophilic member has a structure in which the above-mentioned two-layer film is provided on a surface of the antireflection film.

In addition, as a modification of the antireflection film, a film including a zirconium dioxide layer but not including an aluminum oxide layer can be mentioned. In this case, the underlayer 3 is provided on a surface of the zirconium dioxide layer, and then the photocatalyst layer 2 (outermost surface layer) is provided. In order to maximize the effect of the antireflection film, the thickness of the outermost surface layer is set to be 50 nm or less. Such a thickness is desirable because the interference of light having a wavelength in the visible region is reduced.

The lens is generally of a material such as silicon dioxide glass containing a small amount of sodium, potassium, or the like. When it is required to achieve a large viewing angle as in an in-vehicle camera, the base material used is a base material that has a refractive index higher than that of silicon dioxide and is substantially transparent in the visible region, specifically, lanthanum-boron glass, tantalum glass, or the like. The lanthanum-boron glass is glass containing lanthanum oxide (La₂O₃) and boron oxide (B₂O₃). The tantalum glass is glass containing tantalum oxide (Ta₂O₅).

Next, the in-vehicle camera of the present invention will be described.

FIG. 4 is a schematic cross-sectional view showing an example of the in-vehicle camera of the present invention.

In the drawing, a camera 200 includes a housing 11, and a lens 13 attached to the housing 11 via a gasket 12. A CCD element 14 is provided inside the lens 13. Light entering through the lens 13 is converted into electrical image information by the CCD element 14, and the image information is sent to an image processing device (not shown). A hydrophilic film having antifouling properties is provided on a surface of the lens 13. That is, the lens 13 is the hydrophilic member of the present invention.

Since the lens of the present invention has a layer containing titanium dioxide particles and silicon dioxide particles, the lens has a slightly higher haze than that of a transparent lens. In that case, the CCD element, when disposed as close as possible to the surface of the lens, is capable of preventing the reduction of transmittance due to turbidity as much as possible.

The lens used in the in-vehicle camera of the present invention preferably has haze of 1 or less. When the CCD element is separated from the lens by about 4 mm, the amount of input light is reduced by about 2% from the amount of light entering when the CCD element is separated from the lens by 3 mm. The difference in light transmittance between the case where the distance between the CCD element and the lens is 3 mm and the case where the CCD element is in contact with the lens is 0.5% or less. Therefore, it is desirable that the distance between the CCD element and the lens be 3 mm or less.

Hereinafter, examples of the present invention will be described.

### [Example 1]

### (1) Preparation of coating material for forming hydrophilic film

Tetraethoxysilane (70 parts by mass) was dissolved in ethanol (930 parts by mass), a very small amount of nitric acid was added to the resulting solution, and the resulting mixture was warmed at 50°C for about 1 hour. Through this process, the solvent was volatilized in terms of a silicon concentration of about 1% by mass to give a silica sol liquid (1000 parts by mass) having a silicon dioxide concentration of about 2% by mass after thermal curing. The liquid is a liquid containing a compound having a silicon dioxide structure and an alkoxysilane moiety. The liquid is referred to as a coating liquid A.

Titanium dioxide particles having an average particle diameter of 7 nm, silicon dioxide particles having an average particle diameter of 10 nm, the coating liquid A, and ethanol were mixed and stirred using a planetary ball mill. The liquid, which was initially white as milk, became translucent. The liquid is referred to as a coating liquid B.

The mixing ratio among the coating liquid A, the titanium dioxide particles, the silicon dioxide particles, and ethanol as a solvent is as shown in Table 1.

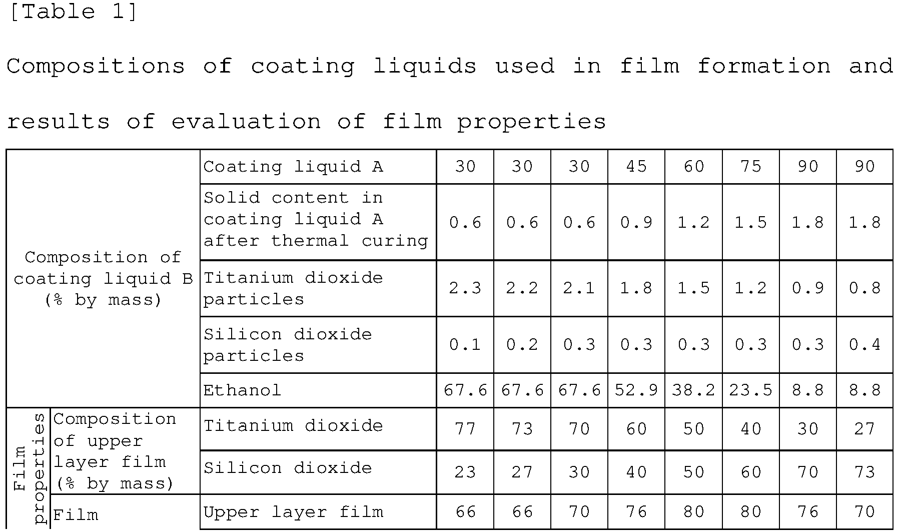

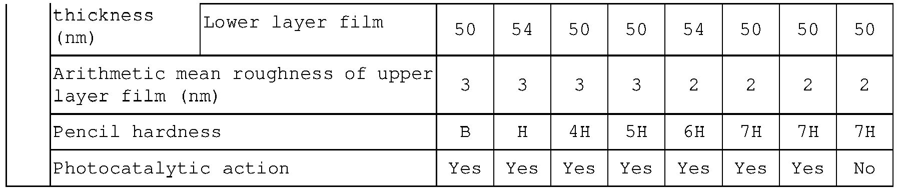

### (2) Film formation

First, the coating liquid A was applied to a glass slide made of blue plate glass by a spin coating method (rotation speed: 2000 rpm, rotation time: 30 seconds). Then, the coating liquid A was heated at 150°C for 10 minutes to form a silicon dioxide layer on a surface of the glass slide.

Next, the coating liquid B was applied to the glass slide made of blue plate glass by a spin coating method (rotation speed: 2000 rpm, rotation time: 30 seconds). Then, the coating liquid B was heated at 150°C for 10 minutes to form a silicon dioxide layer containing titanium dioxide particles and silicon dioxide particles over the surface of the glass slide.

The glass slide on which the films were formed, that is, a hydrophilic member was subjected to the following evaluation.

### (3) Evaluation

### a) Pencil hardness

The pencil hardness of the base material was measured at a load of 750 g and a sliding speed of 1 mm/sec in accordance with JIS K5600-5-4.

### b) Contact angle

The contact angle of a surface of the hydrophilic member with water was measured.

### c) Evaluation of photocatalytic action

The hydrophilic member was left indoors with the film-formed surface facing up. When the contact angle was measured for several days with an interval of one day, the contact angles of the film-formed surfaces of all the base materials gradually increased. When the contact angle of the film-formed surface reached 30° or more, in the case where the contact angle of the film-formed surface decreased to less than 20° after the surface was irradiated with ultraviolet light having a wavelength of 365 nm and an output of 1 mW for 3 hours, the film was evaluated as "Yes" for the photocatalytic action based on the judgement that the photocatalytic function is sufficient. In the case where the contact angle was 20° or more, the film was evaluated as "No" for the photocatalytic action based on the judgement that the photocatalytic function is insufficient.

The above-mentioned evaluation results are also summarized in Table 1.

### (4) Results

As shown in Table 1, when the percentage of titanium dioxide in the composition of the upper layer film was 70% by mass or less, the film had a pencil hardness as high as 4H or more, but the films having a percentage of titanium dioxide of 73% and 77% had lower pencil hardnesses of H and B, respectively.

In addition, the films having a percentage of titanium dioxide of 30% or more were judged as "Yes" for the photocatalytic action, but the film having a percentage of titanium dioxide of 27% was judged as "No" for the photocatalytic action.

Therefore, it is judged that the percentage of titanium dioxide in the upper layer film is preferably 30 to 70%.

### [Example 2]

In this example, a film was formed in the same manner as in Example 1 except that the rotation speed during spin coating was changed, and the film was subjected to the same evaluation.

The rotation speed during spin coating, the properties of the formed upper layer film, and the like are shown in Table 2.

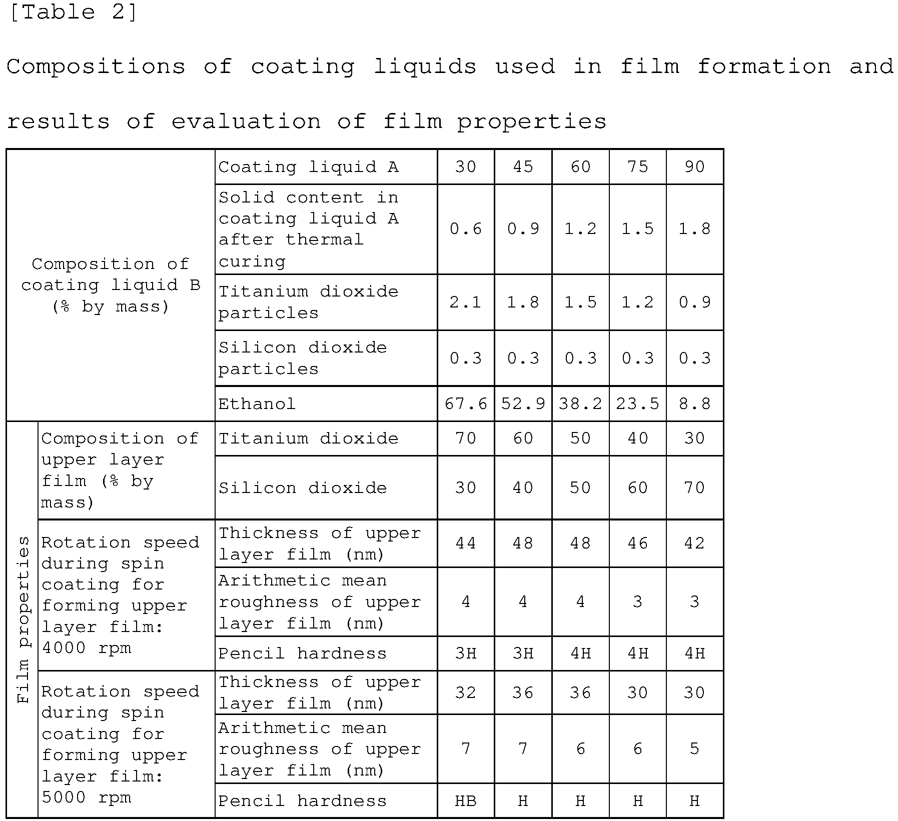

When the rotation speed during spin coating was 4000 rpm, the thickness of the upper layer film was 40 nm or more, and in this case, the arithmetic mean roughness of the surface was 4 nm or less, and the pencil hardness was as high as 3H or more. However, when the rotation speed during spin coating was changed to 5000 rpm, the arithmetic mean roughness was 5 nm or more, and the pencil hardness was reduced to H or less.

Therefore, the thickness of the upper layer film is preferably 40 nm or more. It was also found that the arithmetic mean roughness of the surface is preferably 4 nm or less.

### [Example 3]

In this example, a film was formed in the same manner as in Example 1 except that the rotation speed during spin coating was changed, and the film was subjected to the same evaluation.

The rotation speed during spin coating, the properties of the formed upper layer film, and the like are shown in Table 3.

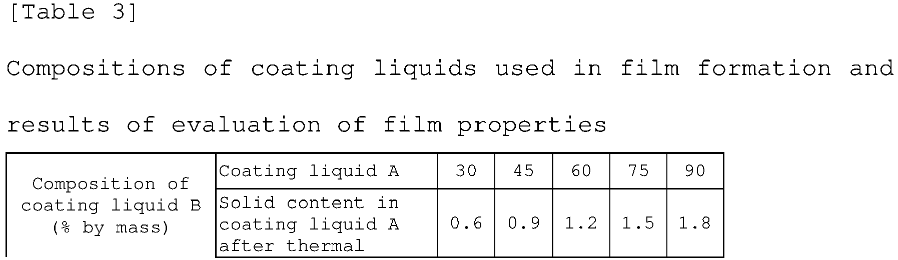

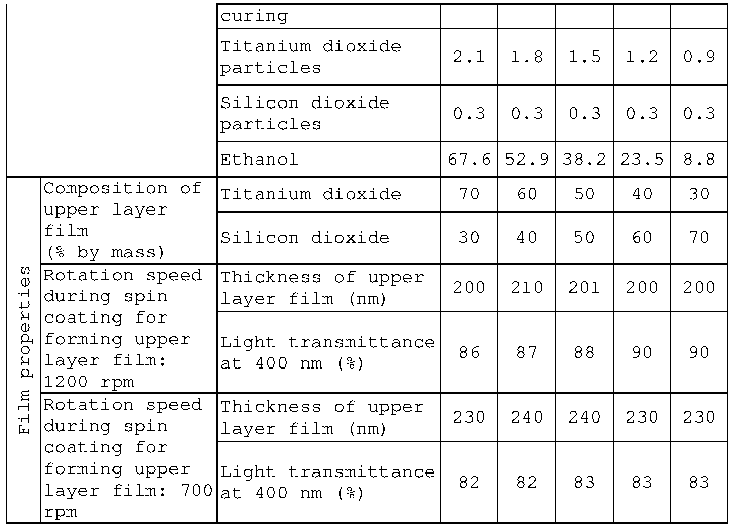

When the rotation speed during spin coating was 1200 rpm, the thickness of the upper layer film was 200 to 210 nm, and in this case, the light transmittance at 400 nm was 86% or more. However, when the rotation speed during spin coating was changed to 700 rpm, the light transmittance at 400 nm was 83% or less. A higher light transmittance is preferable from the viewpoint of ensuring visibility. Since a transmittance of 86% or more is achieved by setting the film thickness to 220 nm or less, it was found that the thickness of the upper layer film is preferably 220 nm or less.

### [Example 4]

In this example, titanium dioxide particles having an average particle diameter of 25 nm, 33 nm, or 40 nm were used in addition to those having an average particle diameter of 7 nm, and the coating liquid was prepared so that both titanium dioxide and silicon dioxide might account for 50% by mass in the upper layer film. The same experiment as in Example 1 was performed except for the above.

The results are summarized in Table 4.

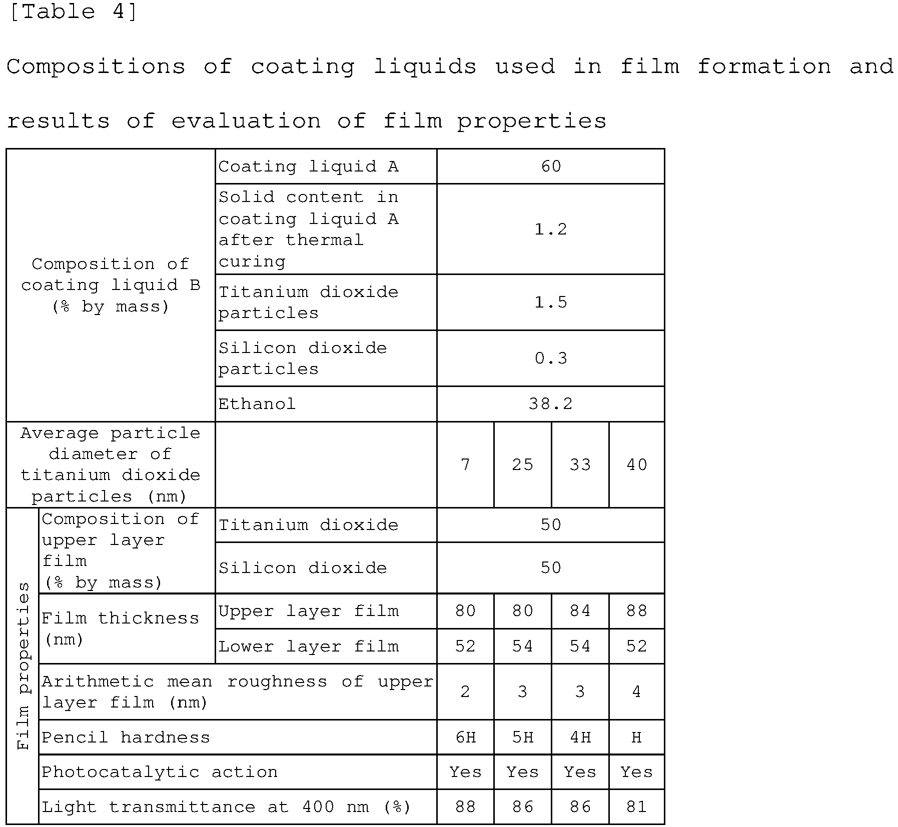

When the base material was visually observed, it was found that the larger the average particle diameter of the titanium dioxide used is, the greater the degree of turbidity of the film is.

As shown in the table, the light transmittance at 400 nm was 86% or more in the range where the average particle diameter of titanium dioxide used was 33 nm or less, but reduced to 81% when the average particle diameter was 40 nm. A higher light transmittance is preferable from the viewpoint of ensuring visibility.

Considering the reduction rate of light transmittance in the range where the average particle diameter of titanium dioxide is 33 nm to 40 nm, it is understood that a transmittance of about 85% or more is achieved when the average particle diameter of titanium dioxide is 35 nm or less. From this, it was judged that the average particle diameter of titanium dioxide is preferably 35 nm or less.

### [Example 5]

In this example, silicon dioxide particles having an average particle diameter of 30 nm, 47 nm, or 55 nm were used in addition to those having an average particle diameter of 10 nm, and the coating liquid was prepared so that both titanium dioxide and silicon dioxide might account for 50% by mass in the upper layer film. The same experiment as in Example 1 was performed except for the above.

The results are summarized in Table 5.

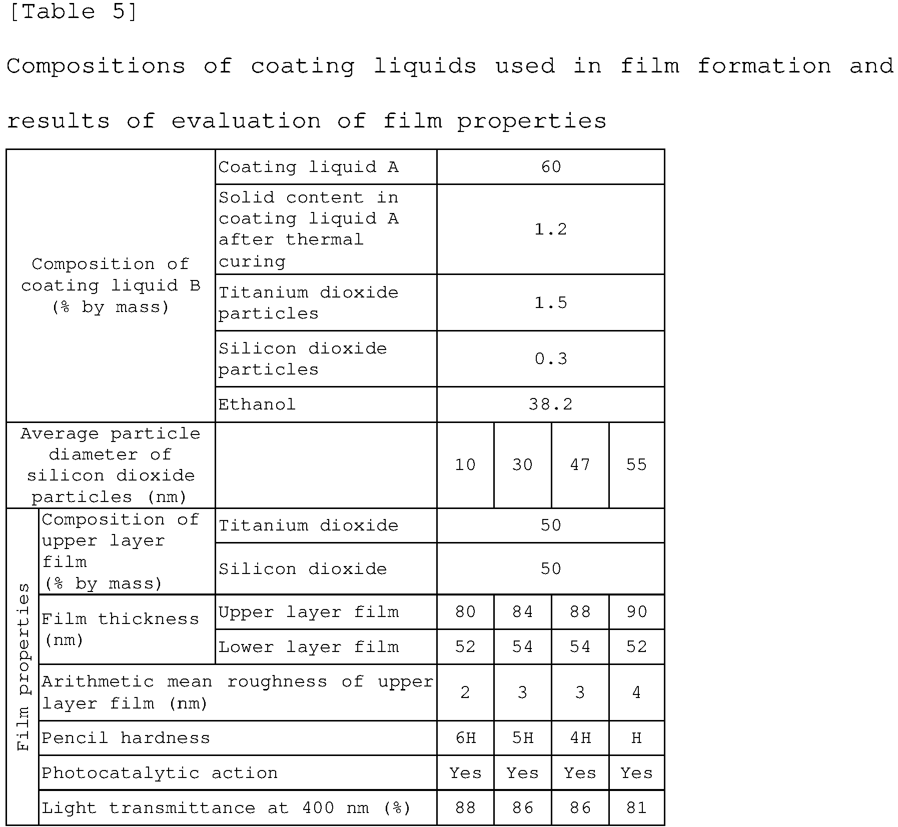

When the base material was visually observed, it was found that the larger the average particle diameter of the silicon dioxide used is, the greater the degree of turbidity of the film is.

As shown in the table, the light transmittance at 400 nm was 86% or more in the range where the average particle diameter of silicon dioxide used was 47 nm or less, but reduced to 81% when the average particle diameter was 55 nm. A higher light transmittance is preferable from the viewpoint of ensuring visibility.

Considering the reduction rate of light transmittance in the range where the average particle diameter of silicon dioxide is 47 nm to 55 nm, it is understood that a transmittance of about 85% or more is achieved when the average particle diameter of silicon dioxide is 50 nm or less. From this, it was judged that the average particle diameter of silicon dioxide is preferably 50 nm or less.

### Reference Signs List

- 1: base material
- 2: photocatalyst layer
- 3: underlayer
- 4: binder
- 5: silicon dioxide particles
- 6: titanium dioxide particles
- 7: resin film
- 8: adhesive layer
- 9: aluminum oxide layer
- 10: zirconium dioxide layer
- 11: housing
- 12: gasket
- 13: lens
- 14: CCD element
- 100, 110, 120: hydrophilic member
- 200: camera

## Claims

1. A hydrophilic member comprising:
a base material;
an underlayer; and
an outermost surface layer,
wherein the underlayer is disposed between the base material and the outermost surface layer,
the outermost surface layer contains silicon dioxide particles, titanium dioxide particles, and a silicon dioxide binder, and
the underlayer contains silicon dioxide.

2. The hydrophilic member according to claim 1, wherein the silicon dioxide particles in the outermost surface layer have an average particle diameter of 10 to 50 nm.

3. The hydrophilic member according to claim 1, wherein the titanium dioxide particles in the outermost surface layer have an average particle diameter of 7 to 35 nm.

4. The hydrophilic member according to claim 1, wherein silicon dioxide and titanium dioxide in the outermost surface layer have a mass ratio of 4 : 6 to 7 : 3.

5. The hydrophilic member according to claim 1, wherein the outermost surface layer has a thickness of 40 to 220 nm.

6. The hydrophilic member according to claim 1, wherein the outermost surface layer has an arithmetic mean roughness of 1 to 4 nm.

7. The hydrophilic member according to claim 1, wherein the underlayer has a thickness of 15 to 90 nm.

8. The hydrophilic member according to claim 1, wherein the base material contains glass or a resin.

9. The hydrophilic member according to claim 1, wherein the base material contains silicon dioxide glass, lanthanum-boron glass, or tantalum glass.

10. The hydrophilic member according to claim 1, wherein the base material contains a polycarbonate resin or an acrylic resin.

11. A lens comprising a hydrophilic member,
wherein the hydrophilic member includes a base material, an underlayer, and an outermost surface layer,
the underlayer is disposed between the base material and the outermost surface layer,
the outermost surface layer contains silicon dioxide particles, titanium dioxide particles, and a silicon dioxide binder, and
the underlayer contains silicon dioxide.

12. The lens according to claim 11, comprising an antireflection film disposed between the underlayer and the base material.

13. The lens according to claim 12, wherein the antireflection film includes an aluminum oxide layer and a zirconium dioxide layer provided in this order on a surface of the base material.

14. An in-vehicle camera that is provided at an outer periphery of a vehicle, the in-vehicle camera comprising the lens according to any one of claims 11 to 13.

15. A resin film that is substantially transparent and transmits light in a visible region, the resin film comprising:
a base material;
an underlayer; and
an outermost surface layer,
wherein the base material contains a resin,
the underlayer is disposed between the base material and the outermost surface layer,
the outermost surface layer contains silicon dioxide particles, titanium dioxide particles, and a silicon dioxide binder,
the underlayer contains silicon dioxide,
the outermost surface layer has a thickness of 40 to 80 nm, and
the underlayer has a thickness of 15 to 50 nm.

16. The resin film according to claim 15, wherein the underlayer and the outermost surface layer are provided over one surface of the base material, and an adhesive layer is provided over another surface of the base material.

17. A window through which an outside of a building or a vehicle is viewable from an inside of the building or the vehicle, the window comprising:
a base material;
an underlayer; and
an outermost surface layer,
wherein the underlayer is disposed between the base material and the outermost surface layer,
the outermost surface layer contains silicon dioxide particles, titanium dioxide particles, and a silicon dioxide binder,
the underlayer contains silicon dioxide, and
the underlayer and the outermost surface layer are provided over a surface of the base material, the surface being positioned at a side of the inside or the outside.

18. The window according to claim 17, wherein the window has a structure in which a resin film is attached to the base material, and
the underlayer and the outermost surface layer are provided on a surface of a resin that constitutes the resin film.
